# EUROPEAN PATENT APPLICATION

(11) **EP 4 376 468 A1**
(43) Date of publication of application: **29.05.2024**
(21) Application number: 22845339.5
(22) Date of filing: 20.07.2022
(51) Int. Cl.: H04W 24/02

(54) **DIGITAL TWINNING METHOD AND APPARATUS**

(30) Priority: 23.07.2021 CN 202110839445
(71) Applicant: Vivo Mobile Communication Co., Ltd., Dongguan, Guangdong 523863 (CN)
(72) Inventor: YUAN, Yannan, Dongguan, Guangdong 523863 (CN); WU, Xiaobo, Dongguan, Guangdong 523863 (CN)
(74) Representative: Conti, Marco
(86) International application number: PCT/CN2022/106684
(87) International publication number: WO 2023/001174

(57) **Abstract**

This application belongs to the field of communication technologies, and discloses a digital twin method and apparatus. The digital twin method is performed by a digital twin management function entity, and includes: receiving a mobile network digital twin template; interacting with a physical network function and/or an infrastructure management function based on information of the mobile network digital twin template to obtain information about physical network deployment, status information, and/or an infrastructure status; and determining, based on the information obtained through interaction, a geographic location area, a user terminal, and/or a network function that supports a digital twin network.

## Description

### CROSS-REFERENCE TO RELATED APPLICATIONS

This application claims priority to Chinese Patent Application No. 202110839445.9, filed on July 23, 2021 in China, which is incorporated herein by reference in its entirety.

### TECHNICAL FIELD

This application relates to the field of communication technologies, and in particular, to a digital twin method and apparatus.

### BACKGROUND

As new services of mobile networks emerge and a network scale increasingly becomes larger, network operation and maintenance are complicated, and innovative technologies have come up against problems of long research and development cycles and difficult deployment implementation. In view of this, digital twins are considered a significant field for 6G networks that provides planning, development and demonstration, intelligent operation and maintenance, and intelligent autonomy for mobile networks in a full lifecycle.

Mobile network end-to-end includes functions such as a core network, a transport network, a radio access network, and a terminal, and establishing an end-to-end digital twin has a high complexity. On one hand, complexity of modeling a network-level digital twin becomes higher with a network scale and scenario diversity. On the other hand, channels with air interfaces, service features, and user mobility of mobile networks are time-varying. Therefore, it is anticipated that mobile network digital twins have high complexity and there are extremely high requirements on an infrastructural resource, for example, that for computing.

### SUMMARY

Embodiments of this application provide a digital twin method and apparatus, to improve resource utilization of a current network and reduce overheads of a digital twin network.

According to a first aspect, an embodiment of this application provides a digital twin method, performed by a digital twin management function entity, and includes:
receiving a mobile network digital twin template;
interacting with a physical network function and/or an infrastructure management function based on information of the mobile network digital twin template to obtain information about physical network deployment, status information, and/or an infrastructure status; and
determining, based on the information obtained through interaction, a geographic location area, a user terminal, and/or a network function that supports a digital twin network.

According to a second aspect, an embodiment of this application provides a digital twin apparatus, used in a digital twin management function entity, and includes:
a receiving module, configured to receive a mobile network digital twin template;
an interaction module, configured to interact with a physical network function and/or an infrastructure management function based on information of the mobile network digital twin template to obtain information about physical network deployment, status information, and/or an infrastructure status; and
a processing module, configured to determine, based on the information obtained through interaction, a geographic location area, a user terminal, and/or a network function that supports a digital twin network.

According to a third aspect, a digital twin apparatus is provided. The terminal includes a processor, a memory, and a processor-executable program or instruction stored in the memory. When the program or the instruction is executed by the processor, steps of the method according to the first aspect are implemented.

According to a fourth aspect, a digital twin apparatus is provided. The apparatus includes a processor and a communication interface. The processor is configured to: receive a mobile network digital twin template; interact with a physical network function and/or an infrastructure management function based on information of the mobile network digital twin template to obtain information about physical network deployment, status information, and/or an infrastructure status; and determine, based on the information obtained through interaction, a geographic location area, a user terminal, and/or a network function that supports a digital twin network.

According to a fifth aspect, a readable storage medium is provided. The readable storage medium stores a program or an instruction, and the program or the instruction is executed by a processor to implement steps of the method according to the first aspect.

According to a sixth aspect, a chip is provided. The chip includes a processor and a communication interface. The communication interface is coupled to the processor, and the processor is configured to run a program or an instruction to perform the method according to the first aspect.

According to a seventh aspect, a computer program/program product is provided. The computer program/program product is stored in a non-volatile storage medium, and the program/program product is executed by at least one processor to implement steps of the method according to the first aspect.

According to an eighth aspect, a communication device is provided. The device is configured to perform steps of the method according to the first aspect.

In the embodiments of this application, a digital twin management function performs decision-making, based on the mobile network digital twin template, on when and how to reuse which resource of a current network to create a digital twin network. On one hand, resource utilization of the current network is improved. On the other hand, overheads of the digital twin network are reduced.

### BRIEF DESCRIPTION OF DRAWINGS

FIG. 1 is a schematic flowchart of a digital twin method according to an embodiment of this application;
FIG. 2 is a diagram of an architecture in a mobile network digital twin solution according to an embodiment of this application;
FIG. 3 is a schematic diagram of a structure of a digital twin apparatus according to an embodiment of this application; and
FIG. 4 is a schematic diagram of composition of a digital twin apparatus according to an embodiment of this application.

### DESCRIPTION OF EMBODIMENTS

The following clearly describes technical solutions in embodiments of this application with reference to the accompanying drawings in the embodiments of this application. Clearly, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and the character "/" generally represents an "or" relationship between associated objects.

It should be noted that, technologies described in the embodiments of this application are not limited to a long term evolution (Long Term Evolution, LTE)/LTE-advanced (LTE-Advanced, LTE-A) system, and can also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following describes a new radio (New Radio, NR) system for example purposes, and terms in NR are used in most of the following descriptions, but these technologies may alternatively be applied to an application other than an NR system application, for example, a 6^{th} generation (6th Generation, 6G) communication system.

A digital twin is an emulation procedure that makes full use of a physical model, a sensor update, running history, and other data and that integrates a plurality of disciplines, a plurality of physical quantities, a plurality of scales, and a plurality of probabilities, to complete mapping in a virtual space, thereby reflecting a full lifecycle of corresponding physical equipment. The technology was initially brought up for achieving digitalization of maintenance of fighter aircrafts and has been applied later to fields such as industrial manufacturing and smart cities. As new services of mobile networks emerge and a network scale increasingly becomes larger, network operation and maintenance is complicated, and innovative technologies have come up against difficulties in deployment implementation. In view of this, digital twins are considered a significant field for 6G networks that provides intelligent operation and maintenance and intelligent autonomy for mobile networks in a full lifecycle.

In a network management system, each network function is defined as a management function or a management element, and model definition is performed on each management function/element. FCAPS (fault, configuration, accounting, performance, security) management is performed based on a network resource model (Network resource model, NRM).

Network function virtualization (Network Function Virtualization, NFV) constructs network function virtualization infrastructure based on a common hardware resource, and implements telecommunication network deployment with split software and hardware. Therefore, based on the NFV technology, a hardware resource can be allocated flexibly, providing a basis for sharing or isolating different network function hardware resources. Based on a 5G core network service-based architecture, a 5G core network function can also implement, based on a service scenario requirement, sharing of a specific network function or isolation of a specific network function.

At present, digital twins are mainly used in industrial manufacturing and smart cities, emphasizing data obtaining by using a physical model and a sensor and mirror construction in digital domain, and provide more accurate and efficient pre-demonstration in a full lifecycle for new product design and urban development. A corresponding network architecture and solution concerning how to implement a digital twin of a mobile network is still being explored.

A management function or management element of a current network management system does not include a user equipment (User Equipment, UE), and therefore, the network management system does not involve UE-level FCAPS management. However, UE-level information and modeling is a highly significant part in a digital twin network. Therefore, a mobile network digital twin solution needs to resolve a problem in UE-level data collection and/or a modeling solution.

A current mobile network is usually designed and deployed based on a network peak capacity. Therefore, in time periods with non-high loads, there is a specific amount of surplus resources of the mobile network. As there is a surplus resource of the mobile network with non-high loads, to reduce unnecessary power consumption, network power consumption is usually reduced by saving electricity of a server or turning off a carrier. In addition, to ensure a telecommunication-level requirement of reaching 99.999% reliability, a key device in the mobile network is backed up when running. Therefore, a digital twin network and a physical network may be considered as a whole to reuse a resource, thereby improving efficiency.

An embodiment of this application provides a mobile network digital twin solution with resource reuse that introduces a digital twin management function (Digital Twin Management Function, DTMF). The DTMF is configured to: receive a mobile network digital twin template; interact with a physical network function (including a core network (Core Network, CN), a radio access network (Radio Access Network, RAN), a UE, and/or a network management system function/service) and/or an infrastructure management function based on information of the mobile network digital twin template to obtain information about current physical network deployment, status information, and/or an infrastructure status; analyze and perform decision-making on a geographic location area, a user, and/or a network function that supports a digital twin network; and perform configuration (C), fault (F), and security (S) management and the like related to a digital twin for a digital twin network function, and interact information about the digital twin with the physical network function. If the digital twin involves UE-level data collection and/or requires participation of a UE, the DTMF needs to trigger and/or obtain user authorization. When UE-level information is involved, a user authorization result is one of the factors that influence the DTMF in analyzing and performing decision-making on this digital twin network. If required, the DTMF may further feed back a digital twin network parameter determined by the DTMF through decision-making to a demand side.

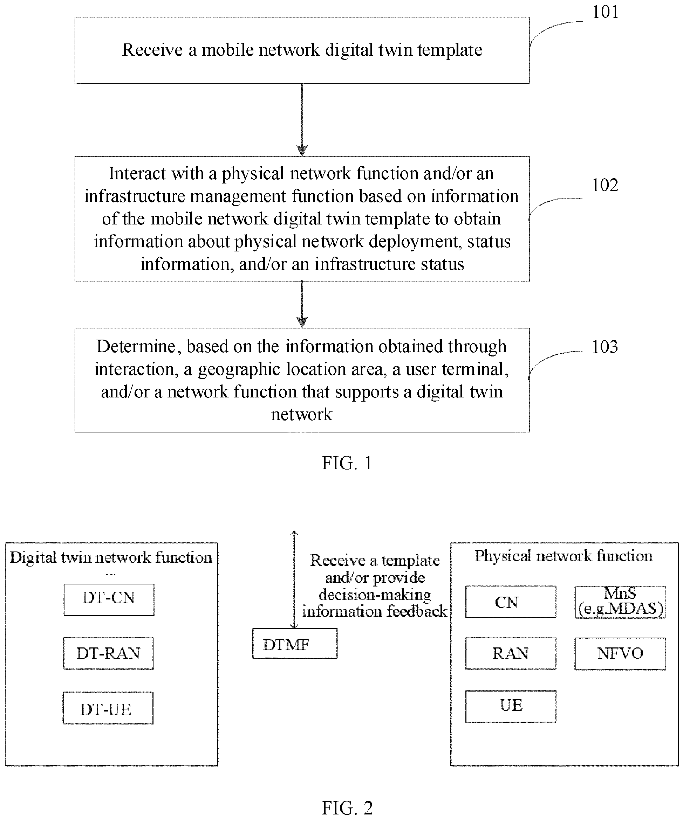

An embodiment of this application provides a digital twin method, performed by a digital twin management function entity, and as shown in FIG. 1 includes:
Step 101: Receive a mobile network digital twin template.
Step 102: Interact with a physical network function and/or an infrastructure management function based on information of the mobile network digital twin template to obtain information about physical network deployment, status information, and/or an infrastructure status.
Step 103: Determine, based on the information obtained through interaction, a geographic location area, a user terminal, and/or a network function that supports a digital twin network.

In the embodiments of this application, a digital twin management function performs decision-making, based on the mobile network digital twin template, on when and how to reuse which resource of a current network to create a digital twin network. On one hand, resource utilization of the current network is improved. On the other hand, overheads of the digital twin network are reduced.

As shown in FIG. 2, a DTMF obtains a digital twin network requirement by using a mobile network digital twin template, and interacts with a network management service, a physical network function, and/or a network function virtualization orchestrator (Network Function Virtualization Orchestrator, NFVO) based on information of the mobile network digital twin template to obtain information about current network deployment, network status information, UE authorization information, accounting information, and/or a network function virtualization infrastructure status, to perform decision-making on a geographic location area, a UE, and/or a network function virtualization infrastructure resource that supports a digital twin network service. A digital twin network function is configured based on decision-making, and digital twin information is exchanged with the physical network function. The technical solution in this embodiment is applicable to a 5G or 6G system.

In some embodiments, the method further includes: performing configuration management, fault management, and security management on the digital twin network function, where information about the configuration management includes at least one of the following:
a collaboration policy for the digital twin network function and the physical network function;
a synchronization policy for the digital twin network function and the physical network function; and
configuration information of the digital twin network function, including a core network function configuration of a digital twin, a radio access network function configuration of the digital twin, and/or a configuration of a digital twin user terminal, where for example, authorization information of the digital twin user, contextual information, and the like are configured for the core network function for the digital twin; a cell frequency band, a power, neighbor cell information, and the like are configured for the radio access network function for the digital twin; and a subscriber profile identity (subscriber profile Identity (subscriber profile ID)) or the like is configured for the digital twin user terminal, to implement dedicated configurations for a digital twin service.

In some embodiments, if a digital twin involves user-level data collection and/or requires participation of the user terminal, the method further includes:
triggering and/or obtaining authorization of the user terminal, where an interaction manner for the authorization may be text messaging, using an online business operations system/application (Application, APP), going to a business office in person, or a combination thereof. The DTMF takes a feature of a lifecycle of a digital twin mobile network into consideration. In addition to a service or data needed for the digital twin, information to be exchanged during authorization of a UE for the digital twin includes at least one of the following:
time information of a digital twin service, where if a long-term digital twin service provided by the UE is required, the time information indicates a time period ranging from when the authorization takes effect to when the authorization expires; or if a long-term digital twin service provided by the UE is not required, a specific time point of the digital twin service that may be a start time, an end time, and/or a time length needs to be provided for a user, where for example, the start time is 3:00 AM (GMT+8), and the end time is 5:00 AM (GMT+8);
an accounting mode and a price of the digital twin service, where when accounting is involved, the information needs to be exchanged; the accounting mode may be traffic-based accounting, price-based accounting, or the like; and the account price may be a measured rate (for example, * G/M traffic/time or * telephone charge/time), a time-based unit price (for example, * G/M traffic/15 minutes or * telephone charge/15 minutes), or the like;
a digital twin mode of the user terminal that may be a complete digital twin mode or a digital twin and physical network co-exist mode; and
user terminal resource information required for the digital twin, for example, a size of a memory, registration information of a user, and a battery capacity.

If accounting is involved in the digital twin mobile network, the DTMF needs to interact, with an accounting function based on a user authorization result, information about the UE that gives authorization (for example, an identifier of the UE), an accounting scheme, and/or a price. The method further includes:
interacting, with an accounting function, information about the user terminal that gives authorization, an accounting scheme, and/or a price.

Based on a requirement, the DTMF feeds back a digital twin network parameter to a demand side. The digital twin network parameter is specific parameter information of an instantiable digital twin network finally determined by the DTMF through decision-making based on the information of the mobile network digital twin template. The parameter information does not involve sensitive information about the network or the user. The digital twin network parameter includes at least one of the following:
a scenario parameter, for example, an inside-the-building scenario in which a quantity of floors, a construction material, and the like may be provided;
a network topology parameter, where the network topology parameter includes at least one of the following: a topological relationship between a core network function, a radio access network function, and a transport network; cellular network cell topology; a neighbor cell relationship configuration information; and beam parameter configuration information; and
a user terminal parameter, where the user terminal parameter includes at least one of the following: a quantity of user terminals; user terminal distribution; user terminal mobility feature distribution; a type of a user terminal; and a terminal capability of the user terminal in the digital twin network, for example, a total quantity of UEs in this digital twin network instance, UE distribution (a relationship of belonging with each cell), and a terminal type or terminal capability information of the UE. The terminal capability information indicates a terminal capability of the UE in the digital twin network that may be different from a terminal capability in a physical network. The terminal capability is related to the foregoing authorization information for the digital twin network and the digital twin mode of the UE.

An application scenario in this embodiment is that an operator provides a digital twin service like providing traffic and voice. Therefore, clients from some industries may demand the operator for a customized digital twin service, and may provide a requirement on a digital twin for a digital twin management function of the operator by using a mobile network digital twin template. Then, after performing decision-making and establishing a digital twin instance that satisfies the requirement, the digital twin management function may feed back a network parameter of the digital twin instance to a demand side.

The mobile network digital twin template is a description of a digital twin mobile network, and includes at least one of the following:
a goal of a digital twin that may be a solution demonstration, data collection, or the like;
a type of the digital twin that may be a static type, a dynamic type, or the like, where the static type means that a digital twin network model does not change, for example, a related cell, a related UE, an air interface bandwidth, and a coverage range do not change, and a related parameter in the goal of the digital twin is changed to form a plurality of snapshot results to reach the goal of the digital twin; and the dynamic type means a digital twin in a continuous time period, for example, from a specific time point (for example, in a year, month, day, hour, minute, second format) to another specific time point; or a digital twin driven by an event, for example, a terminal handover, where a digital twin starts from when a terminal initiates the handover and continues for a period of time;
a digital twin network function set and a digital twin mode of each function, where the digital twin function set indicates digital twin network functions, for example, a core network, a transport network, a radio access network, and a UE, included in a digital twin network, and a digital twin mode of an included digital twin network function may be indicated and may be a complete digital twin mode or a digital twin and physical network co-exist mode;
a scenario that may be an indoor/outdoor scenario, may be a campus, a residential area, a shopping mall, an office building, or the like, or may be a scenario described based on dimensions such as a surface area;
a collaboration policy for a twin and a physical entity that is effective when a resource is reused by the twin and the physical entity and that may be physical entity-prioritized or twin-prioritized, where if the twin and the physical entity both internally support quality of service classification, a collaboration policy for the twin and the physical entity may be defined more precisely based on the quality of service classification;
a synchronization policy for the twin and the physical entity that may be one-time synchronization at specified time, cyclic synchronization, or the like;
an accounting policy, where accounting involved in a digital twin includes the following two parts at most, and when UEs of a network digital twin client and a mobile user are not involved, the information may not be provided: accounting for a client that demands an operator for a network digital twin that may be accounting based on a digital twin network specification (a network function and/or traffic), monthly subscription, or the like; and accounting for a mobile user of a user terminal that joins a digital twin network that may be accounting based on traffic, a quantity of times of supporting the digital twin, or the like, where it should be noted that, as a service provider and a consumer in a case of digital twins are contrary to a normal case, that is, a user is a service provider, the accounting herein is for the purpose of paying a charge to the user, and in consideration of fusion with a current accounting system, a specific conversion approach may be used for accounting based on traffic, to add traffic obtained for supporting a digital twin to a traffic data plan of a user, and a pricing approach may be used for accounting based on a quantity of times, for payment as a telephone charge in a user's account;
a mobile user requirement, including a quantity of mobile users, a user mobility requirement (for example, near-motionless, walking, a vehicle speed, or a ratio of different mobile users), a user terminal type requirement, and a user consumption characteristic (for example, a monthly telephone charge is less than 100 yuan), where if the digital twin network does not involve a mobile user, the information does not need to be included; and
a digital twin function software package and a corresponding description file, where when the digital twin network includes a function specific to a digital twin client, a software package and a corresponding description file of the specific function need to be provided by pre-agreement. The description file includes a deployment resource requirement, a connection relationship with another function, and the like. For example, a central unit-control plane (Central Unit-Control Plane, CU-CP) function for a customized resource allocation algorithm is included. In this case, a CU-CP software package is provided by using a template, and it is described that a CU-CP is connected to an authentication management function (Authentication Management Function, AMF) through an x version of a next generation interface (Next Generation, NG), is connected to a CU-UP through a y version of an E1 interface, and is connected to a distributed unit (Distributed Unit, DU) through a z version of an F1 interface. The DTMF instantiates a software package of a required function based on information of a description file, and deploys the software package to a proper location and completes a connection to a related interface, and performs F, C, and S management.

In this embodiment, the DTMF interacts with a physical network function and/or an infrastructure management function based on the information of the mobile network digital twin template. Specifically, the DTMF may interact with a network management system function/service (for example, an MDAS, management data analytics service), a physical core network function (for example, an NWDAF, Network Data Analytics Function), and/or the infrastructure management function (for example, an NFVO, network functions virtualization orchestrator) to obtain information about current physical network deployment, status information, and/or a network function virtualization infrastructure status, to analyze and perform decision-making on a geographic location area, a user, and/or a network function that supports a digital twin network. The DTMF may alternatively predict, by using artificial intelligence (Artificial Intelligence, AI) or another method based on historical network status information exchanged with a network management system function and/or a network function, when and how to reuse which resource/function of a current network to support the digital twin network, to determine a geographic location area, a user, and/or a network function virtualization infrastructure resource of the digital twin network.

After completing digital twin network deployment in collaboration with the network management system function, the DTMF configures the digital twin network function and/or the physical network function based on the information of the mobile network digital twin template. In this way, the digital twin network function and the physical network function can synchronize and collaborate with each other to implement a digital twin. For example, when a base station hardware resource and a UE hardware resource are reused by the digital twin network function and the physical network function, the DTMF configures a specific parameter for reuse, including time corresponding to the digital twin network function and the physical network function, network configuration information of the digital twin network function and the physical network function, and the like.

Through definition by using the mobile network digital twin template, the DTMF may support functions of dynamic user authorization, an accounting policy, and a digital twin network instance that are adaptive to the template, to achieve effect of reusing a current network deployment resource and improving precision of a digital twin.

It should be noted that the digital twin method provided in the embodiments of this application may be performed by a digital twin apparatus or a module, in the digital twin apparatus, for performing and loading the digital twin method. In the embodiments of this application, an example in which the digital twin apparatus performs and loads the digital twin method is used to describe the digital twin method provided in the embodiments of this application.

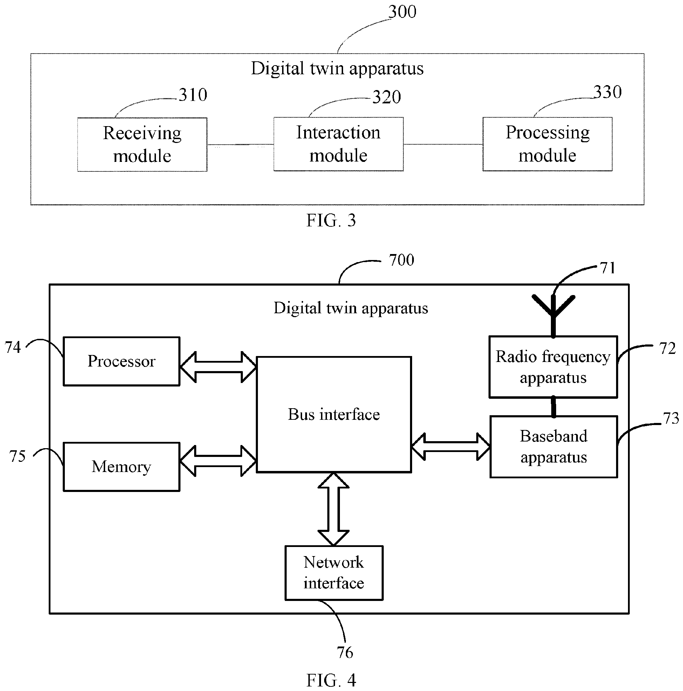

An embodiment of this application provides a digital twin apparatus 300, used in a digital twin management function entity, and as shown in FIG. 3 includes:
a receiving module 310, configured to receive a mobile network digital twin template;
an interaction module 320, configured to interact with a physical network function and/or an infrastructure management function based on information of the mobile network digital twin template to obtain information about physical network deployment, status information, and/or an infrastructure status; and
a processing module 330, configured to determine, based on the information obtained through interaction, a geographic location area, a user terminal, and/or a network function that supports a digital twin network.

In some embodiments, the apparatus further includes: a management module, configured to perform configuration management, fault management, and security management on the digital twin network function, where information about the configuration management includes at least one of the following:
a collaboration policy for the digital twin network function and the physical network function;
a synchronization policy for the digital twin network function and the physical network function; and
configuration information of the digital twin network function, including a core network function configuration of a digital twin, a radio access network function configuration of the digital twin, and/or a terminal configuration of a digital twin user.

In some embodiments, if a digital twin involves user-level data collection and/or requires participation of the user terminal, the apparatus further includes:
an authorization module, configured to trigger and/or obtain authorization of the user terminal.

In some embodiments, information to be exchanged in a process of triggering and/or obtaining authorization of the user terminal includes at least one of the following:
time information of a digital twin service;
an accounting mode and a price of the digital twin service;
a digital twin mode of the user terminal; and
user terminal resource information required for the digital twin.

In some embodiments, the apparatus further includes:
an accounting interaction module, configured to interact, with an accounting function, information about the user terminal that gives authorization, an accounting scheme, and/or a price.

In some embodiments, the apparatus further includes:
a feedback module, configured to feed back a digital twin network parameter to a demand side, where the digital twin network parameter includes at least one of the following:
a scenario parameter;
a network topology parameter; and
a user terminal parameter.

In some embodiments, the network topology parameter includes at least one of the following:
a topological relationship between a core network function, a radio access network function, and a transport network;
cellular network cell topology;
a neighbor cell relationship configuration information; and
beam parameter configuration information.

In some embodiments, the user terminal parameter includes at least one of the following:
a quantity of user terminals;
user terminal distribution;
user terminal mobility feature distribution;
a type of a user terminal; and
a terminal capability of the user terminal in the digital twin network.

In some embodiments, the mobile network digital twin template includes at least one of the following:
a goal of a digital twin;
a type of the digital twin;
a digital twin network function set and a digital twin mode of each function;
a scenario;
a collaboration policy for a twin and a physical entity;
a synchronization policy for the twin and the physical entity;
an accounting policy;
a mobile user requirement; and
a digital twin function software package and a corresponding description file.

In some embodiments, the accounting policy includes at least one of the following:
accounting for a client that demands an operator for a network digital twin; and
accounting for a mobile user of a user terminal that joins a digital twin network.

In some embodiments, the mobile user requirement includes at least one of the following:
a quantity of mobile users;
a user mobility requirement;
a user terminal type requirement; and
a user consumption characteristic.

The digital twin apparatus provided in this embodiment of this application can implement the processes implemented in the method embodiment shown in FIG. 1 and achieve same technical effect. To avoid repetition, details are not described herein again.

An embodiment of this application further provides a digital twin apparatus, including a processor and a communication interface. The processor is configured to: receive a mobile network digital twin template; interact with a physical network function and/or an infrastructure management function based on information of the mobile network digital twin template to obtain information about physical network deployment, status information, and/or an infrastructure status; and determine, based on the information obtained through interaction, a geographic location area, a user terminal, and/or a network function that supports a digital twin network. The digital twin apparatus embodiment corresponds to the foregoing digital twin method embodiment. Each implementation process and implementation of the foregoing method embodiment is applicable to the digital twin apparatus embodiment, and same technical effect can be achieved.

Specifically, an embodiment of this application further provides a digital twin apparatus 700. As shown in FIG. 4, the digital twin apparatus 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72. The radio frequency apparatus 72 processes the received information and then sends the information by using the antenna 71.

A band processing apparatus may be located in the baseband apparatus 73, and the method performed by the digital twin apparatus in the foregoing embodiment may be implemented in the baseband apparatus 73. The baseband apparatus 73 includes a processor 74 and a memory 75.

The baseband apparatus 73 may include, for example, at least one baseband board, and a plurality of chips are arranged on the baseband board. As shown in FIG. 4, one of the chips is, for example, the processor 74, which is connected to the memory 75, to invoke a program in the memory 75, so as to perform the operations of the network device shown in the foregoing method embodiment.

The baseband apparatus 73 may further include a network interface 76, configured to exchange information with the radio frequency apparatus 72. For example, the interface is a common public radio interface (Common Public Radio Interface, CPRI).

Specifically, the digital twin apparatus in this embodiment of the present invention further includes an instruction or a program that is stored in the memory 75 and that can be run on the processor 74. The processor 74 invokes the instruction or the program in the memory 75 to perform the method performed by the modules shown in FIG. 3, and same technical effect can be achieved. To avoid repetition, details are not described herein again.

An embodiment of this application further provides a readable storage medium. The readable storage medium may be non-volatile or volatile. The readable storage medium stores a program or an instruction, and the program or the instruction is executed by a processor to implement the processes in the foregoing digital twin method embodiment, and same technical effect can be achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes in the foregoing digital twin method embodiment, and same technical effect can be achieved. To avoid repetition, details are not described herein again.

It should be understood that the chip mentioned in this embodiment of this application may also be referred to as a system-level chip, a system on chip, a chip system, or an on-chip system chip.

An embodiment of this application further provides a computer program product. The computer program product is stored in a non-transitory readable storage medium, and the computer program product is executed by at least one processor to implement the processes in the foregoing digital twin method embodiment, and same technical effect can be achieved. To avoid repetition, details are not described herein again.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A digital twin method, performed by a digital twin management function entity, and comprising:
receiving a mobile network digital twin template;
interacting with a physical network function and/or an infrastructure management function based on information of the mobile network digital twin template to obtain information about physical network deployment, status information, and/or an infrastructure status; and
determining, based on the information obtained through interaction, a geographic location area, a user terminal, and/or a network function that supports a digital twin network.

2. The digital twin method according to claim 1, wherein the method further comprises:
performing configuration management, fault management, and security management on a digital twin network function, wherein information about the configuration management comprises at least one of the following:
a collaboration policy for the digital twin network function and the physical network function;
a synchronization policy for the digital twin network function and the physical network function; and
configuration information of the digital twin network function, comprising a core network function configuration of a digital twin, a radio access network function configuration of the digital twin, and/or a terminal configuration of a digital twin user.

3. The digital twin method according to claim 1, wherein if a digital twin involves user-level data collection and/or requires participation of the user terminal, the method further comprises:
triggering and/or obtaining authorization of the user terminal.

4. The digital twin method according to claim 3, wherein information to be exchanged in a process of triggering and/or obtaining authorization of the user terminal comprises at least one of the following:
time information of a digital twin service;
an accounting mode and a price of the digital twin service;
a digital twin mode of the user terminal; and
user terminal resource information required for the digital twin.

5. The digital twin method according to claim 4, wherein the method further comprises:
interacting, with an accounting function, information about the user terminal that gives authorization, an accounting scheme, and/or a price.

6. The digital twin method according to claim 1, wherein the method further comprises:
feeding back a digital twin network parameter to a demand side, wherein the digital twin network parameter comprises at least one of the following:
a scenario parameter;
a network topology parameter; and
a user terminal parameter.

7. The digital twin method according to claim 6, wherein the network topology parameter comprises at least one of the following:
a topological relationship between a core network function, a radio access network function, and a transport network;
cellular network cell topology;
a neighbor cell relationship configuration information; and
beam parameter configuration information.

8. The digital twin method according to claim 6, wherein the user terminal parameter comprises at least one of the following:
a quantity of user terminals;
user terminal distribution;
user terminal mobility feature distribution;
a type of a user terminal; and
a terminal capability of the user terminal in the digital twin network.

9. The digital twin method according to claim 1, wherein the mobile network digital twin template comprises at least one of the following:
a goal of a digital twin;
a type of the digital twin;
a digital twin network function set and a digital twin mode of each function;
a scenario;
a collaboration policy for a twin and a physical entity;
a synchronization policy for the twin and the physical entity;
an accounting policy;
a mobile user requirement; and
a digital twin function software package and a corresponding description file.

10. The digital twin method according to claim 9, wherein the accounting policy comprises at least one of the following:
accounting for a client that demands an operator for a network digital twin; and
accounting for a mobile user of a user terminal that joins a digital twin network.

11. The digital twin method according to claim 9, wherein the mobile user requirement comprises at least one of the following:
a quantity of mobile users;
a user mobility requirement;
a user terminal type requirement; and
a user consumption characteristic.

12. A digital twin apparatus, used in a digital twin management function entity, and comprising:
a receiving module, configured to receive a mobile network digital twin template;
an interaction module, configured to interact with a physical network function and/or an infrastructure management function based on information of the mobile network digital twin template to obtain information about physical network deployment, status information, and/or an infrastructure status; and
a processing module, configured to determine, based on the information obtained through interaction, a geographic location area, a user terminal, and/or a network function that supports a digital twin network.

13. The digital twin apparatus according to claim 12, wherein the apparatus further comprises a management module, configured to perform configuration management, fault management, and security management on a digital twin network function, wherein information about the configuration management comprises at least one of the following:
a collaboration policy for the digital twin network function and the physical network function;
a synchronization policy for the digital twin network function and the physical network function; and
configuration information of the digital twin network function, comprising a core network function configuration of a digital twin, a radio access network function configuration of the digital twin, and/or a terminal configuration of a digital twin user.

14. The digital twin apparatus according to claim 12, wherein if a digital twin involves user-level data collection and/or requires participation of the user terminal, the apparatus further comprises:
an authorization module, configured to trigger and/or obtain authorization of the user terminal.

15. The digital twin apparatus according to claim 14, wherein information to be exchanged in a process of triggering and/or obtaining authorization of the user terminal comprises at least one of the following:
time information of a digital twin service;
an accounting mode and a price of the digital twin service;
a digital twin mode of the user terminal; and
user terminal resource information required for the digital twin.

16. The digital twin apparatus according to claim 15, wherein the apparatus further comprises:
an accounting interaction module, configured to interact, with an accounting function, information about the user terminal that gives authorization, an accounting scheme, and/or a price.

17. The digital twin apparatus according to claim 12, wherein the apparatus further comprises:
a feedback module, configured to feed back a digital twin network parameter to a demand side, wherein the digital twin network parameter comprises at least one of the following:
a scenario parameter;
a network topology parameter; and
a user terminal parameter.

18. The digital twin apparatus according to claim 17, wherein the network topology parameter comprises at least one of the following:
a topological relationship between a core network function, a radio access network function, and a transport network;
cellular network cell topology;
a neighbor cell relationship configuration information; and
beam parameter configuration information.

19. The digital twin apparatus according to claim 17, wherein the user terminal parameter comprises at least one of the following:
a quantity of user terminals;
user terminal distribution;
user terminal mobility feature distribution;
a type of a user terminal; and
a terminal capability of the user terminal in the digital twin network.

20. The digital twin apparatus according to claim 12, wherein the mobile network digital twin template comprises at least one of the following:
a goal of a digital twin;
a type of the digital twin;
a digital twin network function set and a digital twin mode of each function;
a scenario;
a collaboration policy for a twin and a physical entity;
a synchronization policy for the twin and the physical entity;
an accounting policy;
a mobile user requirement; and
a digital twin function software package and a corresponding description file.

21. The digital twin apparatus according to claim 20, wherein the accounting policy comprises at least one of the following:
accounting for a client that demands an operator for a network digital twin; and
accounting for a mobile user of a user terminal that joins a digital twin network.

22. The digital twin apparatus according to claim 20, wherein the mobile user requirement comprises at least one of the following:
a quantity of mobile users;
a user mobility requirement;
a user terminal type requirement; and
a user consumption characteristic.

23. A digital twin apparatus, comprising a processor, a memory, and a processor-executable program or instruction stored in the memory, and when the program or the instruction is executed by the processor, steps of the digital twin method according to any one of claims 1 to 11 are implemented.

24. A readable storage medium, wherein the readable storage medium stores a program or an instruction, and when the program or the instruction is executed by a processor, steps of the digital twin method according to any one of claims 1 to 11 are implemented.

25. A chip, wherein the chip comprises a processor and a communication interface, the communication interface is coupled to the processor, and the processor is configured to run a program or an instruction to implement steps of the digital twin method according to any one of claims 1 to 11.

26. A computer program product, wherein the computer program product is stored in a non-volatile storage medium, and the program product is executed by at least one processor to implement steps of the digital twin method according to any one of claims 1 to 11.

27. A communication device, configured to implement steps of the digital twin method according to any one of claims 1 to 11.
